# EUROPEAN PATENT SPECIFICATION

(11) **EP 1 424 229 B1**
(45) Date of publication and mention of the grant of the patent: **10.05.2006**
(21) Application number: 02765433.4
(22) Date of filing: 05.09.2002
(51) Int. Cl.: B60H 1/00, B60H 1/32

(54) **AIR CONDITIONER FOR VEHICLE**
FAHRZEUGKLIMAANLAGE
DISPOSITIF DE CLIMATISATION POUR UN VEHICULE

(30) Priority: 06.09.2001 JP 2001269689
(43) Date of publication of application: 02.06.2004
(73) Proprietor: Japan Climate Systems Corporation, Higashihiroshima-shi, Hiroshima 739-0153 (JP)
(72) Inventor: YASUDA, Hideaki, c/o JAPAN CLIMATE SYSTEMS CORP., Higashihiroshima-shi, Hiroshima 739-0153 (JP); NAGATA, Hiromichi, c/o JAPAN CLIMATE SYSTEMS CORP., Higashihiroshima-shi, Hiroshima 739-0153 (JP); YAMAMOTO, Tsutomu, c/o JAPAN CLIMATE SYSTEMS CORP., Higashihirosima-shi, Hiroshima 739-0153 (JP)
(74) Representative: Gossel, Hans K.
(86) International application number: PCT/JP2002/009075
(87) International publication number: WO 2003/022609

(56) References cited:
- EP-A- 1 101 640
- JP-A- 2001 206 051
- JP-A- 2001 213 142
- JP-A- 2002 120 539
- US-A- 5 711 368
- US-A- 5 755 107
- US-B1- 6 422 301

## Description

The invention relates to a vehicle air conditioner according to the preamble of claim 1.

Heretofore, the vehicle air conditioner of this type integrates the functions of a heater and a cooler into a singe air conditioning unit to make the air conditioner compact in overall size as disclosed in Japanese Unexamined Patent Publications No. 9223748 and No. 10-244820, for example. In this conventional vertical unitary air conditioner, the air conditioning unit disposed inside an instrument panel of a car accommodates an evaporator (cooling heat exchanger), an air mix damper, and a heater core (heating heat exchanger) in this order from below, and is provided at its portion above the heater core with a direction changing section for changing the discharge direction of a conditioned air.

The air conditioner is further provided with an air blowing unit located toward a passenger's seat and containing a blower, and is formed to introduce an air to be conditioned from the air blowing unit into an introduction space provided at a lower end of the air conditioning unit, direct the air upward so that it passes through the evaporator, divert the air flow into the heater core and into a bypass passage through which the air flow bypasses the heater core, mix the diverted air flows again to provide a conditioned air, and then distribute the conditioned air from the direction changing section to a cabin via a duct.

EP-A-1 101 640 discloses an automotive air conditioning unit in which heating and cooling heat exchangers are juxtaposed one above the other in an air conditioning unit, an air to be conditioned is introduced from either right or left (in a widthwise direction of a car) into a lower part of the air conditioning unit, and the air is allowed to flow upward in the air conditioning unit.

US-A-5 755 107 discloses an air conditioning unit where the guide plates are formed on the upper face of the bottom wall part.

Now, the air conditioning unit of the vertical unitary air conditioner in which evaporator and heater core are juxtaposed one above the other as described above is, in general, considerably large in vertical size; therefore, the air conditioning unit is disposed inside an instrument panel of a car roughly in the widthwise center of the car.

On the other hand, the air blowing unit for supplying air to the air conditioning unit is suitably disposed in front of a passenger's seat. In this case, since wide legroom has to be secured for an occupant in the passenger's seat, the air blowing unit is normally located at as high a position as possible, and therefore, an air duct through which air is sent from the air blowing unit to the lower end of the air conditioning unit is provided so as to incline downward from the air blowing unit to the air conditioning unit.

However, since the air duct is disposed to incline in this way, air flowing through the duct flows obliquely downward into the introduction space at the lower end of the air conditioning unit. In particular, when the flow quantity and/or flow rate of air, i. e. the quantity and/or velocity of air, are/is great, the air flow collides against an upper face of a bottom wall part of the air conditioning unit and become turbulent to reduce the air blowing efficiency, and in addition, a considerable amount of the air flow that is directed upward at the bottom wall part to go toward the evaporator is deflected to the right-side or left-side of the air conditioning unit, thus causing the problem that the heat exchanger efficiency is decreased.

Furthermore, the upper face of the bottom wall part of the air conditioning unit normally serves as a drip tray for condensate dripping from the evaporator, and might temporarily accumulate the condensate. In that case, if the air flowing from the air duct collides against the upper face as described above, the accumulated condensate is splattered against the evaporator, which might also cause a reduction in the heat exchange efficiency, and furthermore, the splattered condensate brings about the problem that the turbulent air flow is stepped up.

The present invention has been made in view of the above points and its object is to provide a vertical unitary air conditioner for supplying air, from an air blowing unit provided at one side of a car in a widthwise direction thereof, to an introduction space at a lower part of an air conditioning unit, in which turbulent air flow is suppressed in the introduction space, the deflection of air flow passing through a cooling heat exchanger is alleviated, and problems due to the splatter of condensate are prevented before they occur, by giving consideration mainly to the layout of an air flow passage in an air duct and/or the air conditioning unit.

The above object is solved by a vehicle air conditioner with the features of claim 1.

According to this solution taken by the present invention, air flow that is introduced through an air duct from one side of a car in a widthwise direction thereof and flows into an introduction space at a lower end of an air conditioning unit is directed upward before the air flow reaches a position below a cooling heat exchanger.

Specifically, a first invention of the present application is based on a vehicle air conditioner, in which an air conditioning unit and an air blowing unit are juxtaposed within an instrument panel of a car in a widthwise direction of the car, air sent from the air blowing unit is introduced into an introduction space at a lower end of the air conditioning unit to allow the air to flow upward in the air conditioning unit, and heat exchange is carried out using a cooling heat exchanger disposed in the air conditioning unit and/or a heating heat exchanger disposed above the cooling heat exchanger, thus producing a conditioned air.

Further, the cooling heat exchanger is disposed to allow its lower face to face the introduction space of the air conditioning unit and is disposed to extend almost horizontally in the widthwise direction of the car, and the air blowing unit is disposed at one side of the car in the widthwise direction thereof and next to the air conditioning unit. Furthermore, an air duct extending from the air blowing unit to the lower end of the air conditioning unit is disposed to incline downward from the air blowing unit to the air conditioning unit. Besides, the air conditioning unit and/or the air duct are/is provided with an air flow directing section for directing air flow upward at a portion of the air conditioning unit and/or the air duct which is located closer to the air blowing unit disposed at said one side of the car in the widthwise direction thereof than said one side end of the cooling heat exchanger in the widthwise direction of the car.

In the above-descried arrangement, the air flow that is sent from the air blowing unit and flows through the air duct from said one side of the car toward the other side of the car in the widthwise direction thereof is directed upward in the air flow directing section of the air duct and/or the air conditioning unit, and the air flow is introduced almost horizontally into the introduction space before the air flow reaches a position below the cooling heat exchanger of the air conditioning unit. Thus, the air flow is prevented from colliding violently against an upper face of a bottom wall part of the air conditioning unit, which prevents the occurrence of high turbulence and splatter of condensate due to the collision.

Moreover, since the air flow directing section is provided at a portion of the air conditioning unit and/or the air duct which is located closer to the air blowing unit disposed at said one side of the car in the widthwise direction thereof than said one side end of the cooling heat exchanger in the widthwise direction of the car, part of the air flow directed upward in the air flow directing section goes directly to the cooling heat exchanger and joins the main stream of the air flow directed upward after having been introduced almost horizontally into an innermost part of the introduction space as described above, which alleviates the deflection of the air flow passing through the cooling heat exchanger.

In other words, according to the present invention, the air flow introduced into the introduction space at the lower end of the air conditioning unit can be prevented from becoming turbulent to improve the air blowing efficiency, and at the same time, the deflection of the air flow directed upward in the introduction space can be alleviated to increase the degree of uniformity of the flow distribution in the cooling heat exchanger. In addition, it is possible to prevent the splatter of condensate due to the air flow, and thus it is possible to prevent problems resulting from the splattered condensate before they occur.

In an air conditioner according to a second invention, the air flow directing section includes a flat face that is continuous with a lower wall face of the air duct passage and extends almost horizontally in the widthwise direction of the car.

Thus, the air flow going obliquely downward along the wall face of the air duct is smoothly directed upward along the flat face continuous with the lower wall face of the air duct, and as a result it is possible to sufficiently obtain the effects of the first invention.

In an air conditioner according to a third invention, the cooling heat exchanger is disposed to allow the lower face thereof to incline in a lengthwise direction of the car, and to allow its tube to extend in the lengthwise direction of the car, and the air conditioning unit has a bottom wall part provided, at its upper face opposite to the lower face of the cooling heat exchanger, with a shielding rib that protrudes upward and extends in the widthwise direction of the car to shield, from the introduction space, at least relatively lower one of front and rear ends of the cooling heat exchanger.

In this arrangement, since the lower face of the cooling heat exchanger is inclined in the lengthwise direction of the car, and the tube of the cooling heat exchanger extends also in the lengthwise direction of the car, condensate produced in the cooling heat exchanger flows in the lengthwise direction along the tube and drips down from relatively lower one of the ends of the cooling heat exchanger. In this embodiment, since the shielding rib that protrudes from the upper face of the bottom wall part opposite to the lower face of the cooling heat exchanger and that extends in the widthwise direction of the car is provided at an inner portion of the air conditioning unit adjacent to the lower end of the cooling heat exchanger, a portion of the cooling heat exchanger adjacent to the lower end thereof is shielded from the introduction space. Therefore, the condensate dripping down from the lower end will not be affected by the air flow in the introduction space, and will not make the air flow turbulent. That is, the air flow is further prevented from becoming turbulent in the introduction space of the air conditioning unit, and furthermore, the condensate from the cooling heat exchanger can be discharged more smoothly.

In addition, since the condensate from the cooling heat exchanger is accumulated in an inner portion of the air conditioning unit shielded from the introduction space by the shielding rib, it is possible to prevent the splatter of condensate due to the air flow introduced into the introduction space.

As described above, in the vehicle air conditioner according to the first invention of the present application which is formed as a vertical unitary air conditioner, a substantially horizontal air flow is introduced from the air blowing unit at said one side of the car in the widthwise direction thereof to the introduction space at the lower end of the air conditioning unit to improve the air blowing efficiency, and at the same time, the deflection of the air flow going to the heat exchanger located above is alleviated to improve the heat exchange efficiency. In addition, it is possible to prevent the splatter of condensate against the heat exchanger.

According to the invention of Claim 2, the air flow going obliquely downward through the air duct can be smoothly directed, thus making it possible to sufficiently obtain the effects of the invention of Claim 1.

According to the invention of Claim 3, the air flow in the introduction space of the air conditioning unit can be further prevented from becoming turbulent, and furthermore, the splatter of condensate due to the air flow can be prevented with much more certainty.

### BRIEF DESCRIPTION OF DRAWINGS

FIG. **1** is a front left perspective view showing the external appearance of an air conditioner according to an embodiment of the present invention.
FIG. **2** is a front right perspective view showing the external appearance of the air conditioner.
FIG. **3** is a front view showing the external appearance of the air conditioner.
FIG. **4** is a schematic diagram showing the layout of the air conditioner in an instrument panel.
FIG. **5** is a diagram showing the overall arrangement of the air conditioner shown in FIG. **3**.
FIG. **6** is a schematic diagram showing the configuration of an introduction space at a lower end of an air conditioning unit.
FIG. **7** is a longitudinal cross-sectional view showing the internal structure of the air conditioning unit.
FIG. **8** is a diagram showing, as viewed in a widthwise direction of a car, the flow of air in the air conditioning unit shown in FIG. 7.
FIG. **9** is a schematic diagram showing, as viewed in a lengthwise direction of the car, the flow of air in the air conditioning unit.
FIG. **10** is a schematic diagram showing the assembly structure of a casing main body of the air conditioning unit.
FIGS. **11A, 11B** and **11C** are a front view, a side view and a bottom view of an intermediate connecting member, respectively.
FIG. **12** is a cross-sectional view taken along the line XII-XII in FIG. **11**.

### BEST MODE FOR CARRYING OUT THE INVENTION

Hereinafter, an embodiment of the present invention will be described with reference to the drawings.

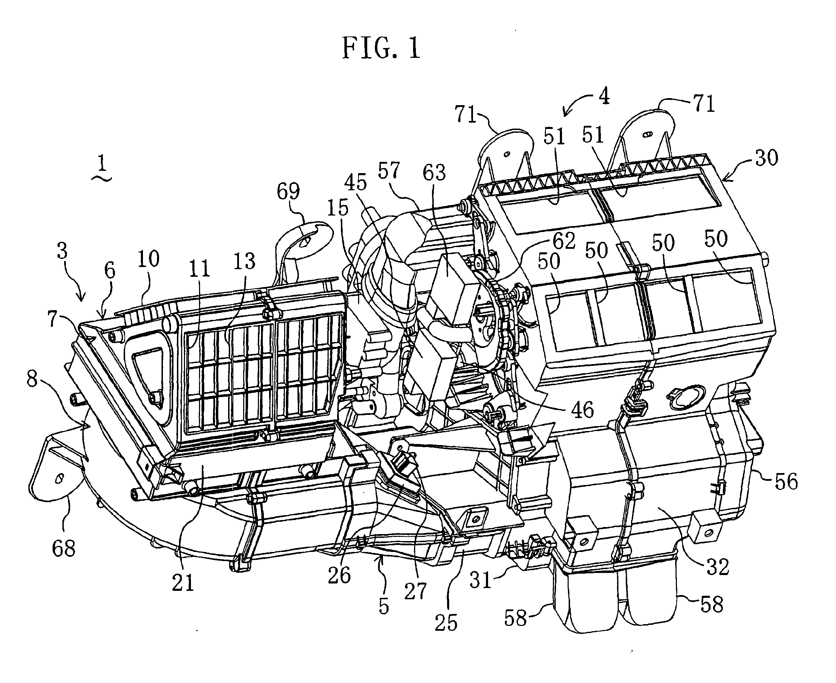

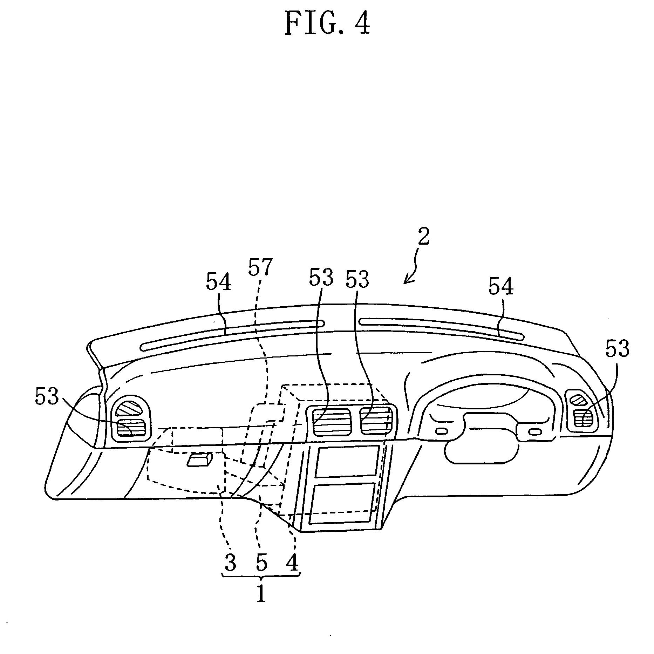

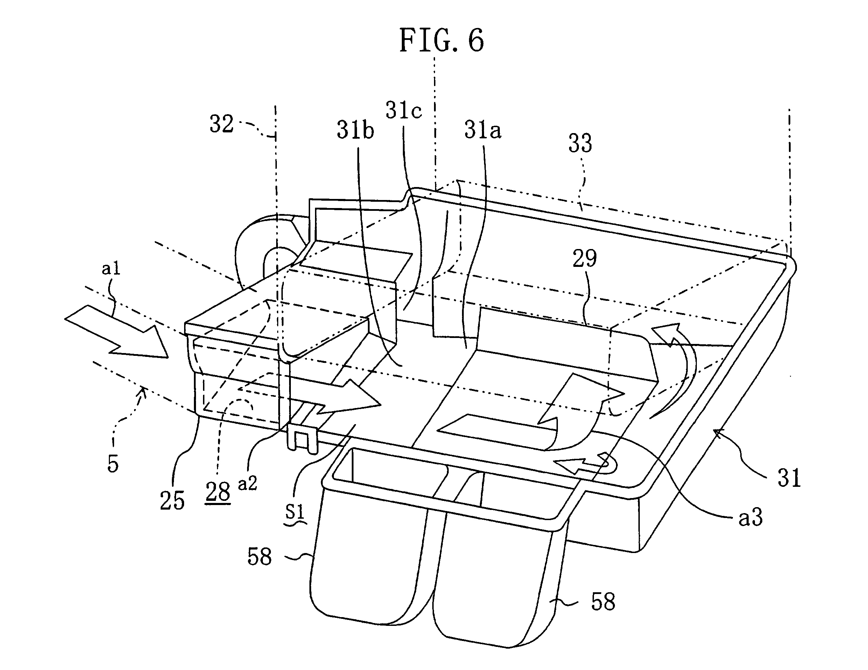

FIGS. **1** to **3** each show the external appearance of an air conditioner **1** according to the embodiment of the present invention, and the air conditioner **1** is housed, as shown in FIG. **4,** inside an instrument panel **2** provided at the front part of a cabin of a car (vehicle). The car is a right-hand drive car provided at the right-side and left-side of its body with a driver's seat and a passenger's seat, respectively, and at the back of the instrument panel **2** (at the front side of the instrument panel **2** in the longitudinal direction of the car body), a dash panel **P** (shown only in FIG. **6**) with which the cabin and an engine room in front of the cabin are partitioned is provided. It should be noted that, in this specification, a car body front side and a car body rear side are hereinafter simply called "the front-side" and "the rear-side", respectively, and a car body left side and a car body right side are hereinafter simply called "the left-side" and "the right-side" by using the car body as the reference. Therefore, the front side of the air conditioner **1** itself is sometimes called "the rear-side of the air conditioner **1**" since the front side of the air conditioner **1** itself is located closer to the rear of the car body, while the back side of the air conditioner **1** located closer to the front of the car body is sometimes called "the front-side of the air conditioner **1**".

As shown in FIGS. **1** through **3**, the air conditioner **1** includes: an air blowing unit **3**; an air conditioning unit **4** for cooling air sent from the air blowing unit **3** and then controlling the temperature of the air to supply it to the cabin as a conditioned air; and an intermediate duct **5** (air duct) through which the air from the air blowing unit **3** is sent to the air conditioning unit **4**. The air conditioning unit **4** is disposed roughly in the widthwise center of the car, while the air blowing unit **3** is disposed in front of the passenger's seat so as to be separated by a predetermined distance from the air conditioning unit **4** toward the left end of the car body. In this arrangement, the lower end of the air blowing unit **3** is positioned above the lower end of the air conditioning unit **4**, thus securing wide legroom for an occupant in the passenger's seat.

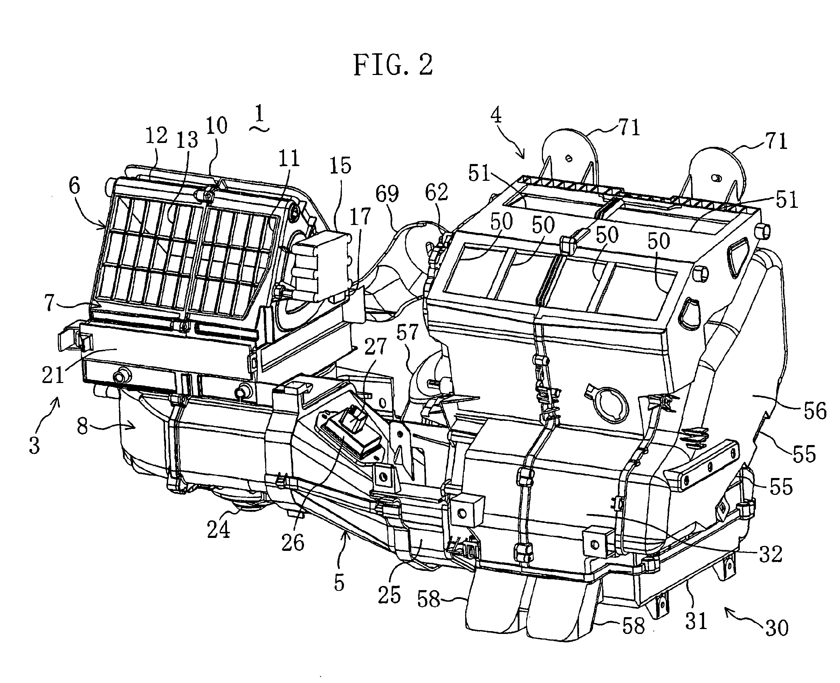

The air blowing unit **3** includes a casing **6** divided into two parts, right and left, in an approximate widthwise center thereof, and the two parts are combined with each other by fasteners, for example. The casing **6** is provided at an upper part thereof with an air intake section **7** through which air is taken into the air conditioner **1**, and is provided at a lower part thereof with an air blowing section **8** for blowing the taken air to the air conditioning unit **4**. The air intake section **7** is provided at an upper portion thereof with: an outside air intake **10** through which air is taken from outside the cabin via a duct not shown; and an indoor air intake **11** through which air is taken from inside the cabin. Furthermore, an indoor air/outside air switching damper **12** (shown only in FIG. **2**) that is actuated to close one of the intakes while opening the other intake is provided inside the air intake section 7.

To be more specific, the upper portion of the air intake section **7** assumes the form of a roof in which two inclined parts thereof that are adjacent to each other one in front of the other lean against each other, thus forming a triangular roof portion having a substantially triangular cross-section as viewed in the widthwise direction of the car. The roof portion is provided at its front part and rear part with the outside air intake **10** and indoor air intake **11**, respectively, and the indoor air intake **11** is integrally molded with a grill **13**. On the other hand, side parts of the air intake section **7** are formed to connect corresponding lateral ends of the front and rear parts. The indoor air/outside air switching damper **12** is formed into a rectangular shape greater than each of the intakes **10, 11** and has, at an upper edge thereof, a shaft extending in the widthwise direction of the car, and both ends of the shaft are supported at upper ends of a pair of side parts of the air intake section **7**.

The indoor air/outside air switching damper **12** is provided at a lower end thereof with a connection (not shown) cutting through the associated side part of the air intake section **7** so that the damper **12** is connected to an output shaft of an actuator **15** attached to the side part. Further, the side part is integrally formed with bosses on which the actuator **15** is fastened with screws, for example. The actuator **15** is formed to operate in response to a signal sent from an air-conditioning control section (not shown) provided in the car body, and a signal line from the air-conditioning control section is to be connected to a coupler **17** for the actuator **15**.

Furthermore, when the indoor air/outside air switching damper **12** is rotated about its shaft by the actuator **15** to assume a position for fully opening the outdoor air intake **10**, the indoor air intake **11** is fully closed to put the air intake section 7 in an outdoor air intake mode in which only outdoor air is taken. On the other hand, when the indoor air/outside air switching damper **12** is rotated reversely from the above state to assume a position for fully closing the outdoor air intake **10,** the indoor air intake **11** is fully opened to put the air intake section **7** in a so-called indoor air circulation mode.

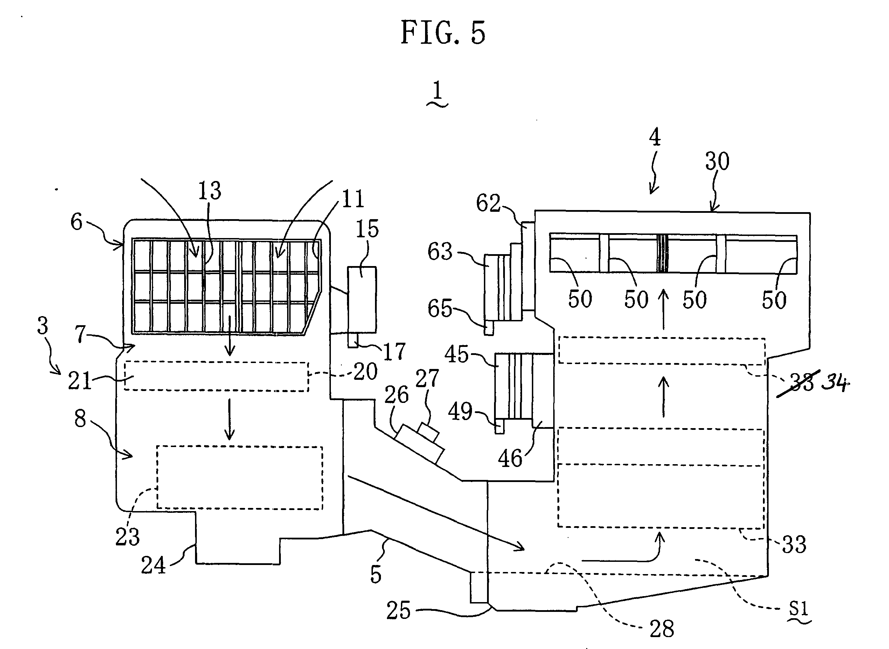

Meanwhile, the air intake section 7 is provided at a lower portion thereof with a filter disposition part **21** in which a filter **20** for filtering out intake air is disposed as indicated by the broken line in FIG. **5**. Provided below the filter disposition part **21** is the air blowing section **8** in which a centrifugal multi-blade fan as an air blowing fan **23** is provided such that its rotating shaft extends vertically, and provided around the air blowing fan **23** is a spiral air trunk. Further, a fan drive motor **24** is provided under the air blowing fan **23**. As indicated by the arrows in FIG. **5**, due to the rotation of the air blowing fan **23**, air is taken through the upper portion of the air intake section 7, allowed to pass through the filter **20**, and then introduced to the air blowing section **8**.

Furthermore, the air blowing section **8** is formed at a right wall part thereof with an opening so as to communicate the air trunk with the intermediate duct **5**, and the opening is connected with a left end of the intermediate duct **5**. The intermediate duct **5** extends obliquely downward from the air blowing section **8** to the lower end of the air conditioning unit **4**, i.e., from one side of the car in the widthwise direction thereof (the left-side of the car body in this example) toward the other side (the right-side of the car body in this example), and is connected at a lower end thereof with the lower end of the air conditioning unit **4**. To be more specific, the air conditioning unit **4** is provided at its lower end with a duct connecting section **25** extending substantially horizontally outward, and the right end of the intermediate duct **5**, inclined downward from the left-side of the car body toward the right-side of the car body as described above, is connected with the left end of the duct connecting section **25**. It should be noted that the intermediate duct **5** is provided at an upper wall thereof with a control circuit **26** for changing, for example, the number of rotations of the air blowing fan **23**, and a coupler **27** is provide on the control circuit **26**.

As shown in FIG. **6**, the duct connecting section **25** is provided so as to extend from a casing main body **32** which will be described later (and is indicated by the virtual line in FIG. **6**) to a bottom wall part **31** at a lower end of a casing **30** for the air conditioning unit **4**, and is formed into a triangular tube shape extending almost horizontally overall. And the left end of a passage formed inside the duct connecting section **25** communicates with the right end of a passage formed inside the intermediate duct **5,** while the right end of the passage inside the duct connecting section **25** communicates with an introduction space **S1** which is defined at the lower end of the air conditioning unit **4** and through which an air to be conditioned is introduced. In other words, the duct connecting section **25** extends from the casing main body **32** of the air conditioning unit **4** toward the left end of the car body, and is located closer to the left end of the car body than the left end of an evaporator **33** (one side end thereof in the widthwise direction of the car) which is provided within the casing main body **32** and will be described later (and is indicated by the virtual line).

Further, a bottom face **28** of the passage inside the duct connecting section **25** is flat so as to extend almost horizontally in the widthwise direction of the car in a manner that the bottom face **28** is continuous with a lower wall face of the intermediate duct **5**, and extend almost horizontally in the longitudinal direction of the car. Furthermore, air flow introduced obliquely downward through the intermediated duct **5** as indicated by the arrow **a1** in FIG. **6** is smoothly directed upward along the bottom face **28** of the passage inside the duct connecting section **25,** and becomes a substantially horizontal flow **a2** to flow into the introduction space **S1** of the air conditioning unit **4**. As indicated by the arrow **a3** in FIG. **6**, the main stream of the air flow collides against a side wall of the casing **30** at the right-side of the car body and is directed upward overall. However, part of the flow turns back along front and rear wall faces of the casing **30** surrounding the introduction space **S1**.

### -ARRANGEMENT OF AIR CONDITIONING UNIT-

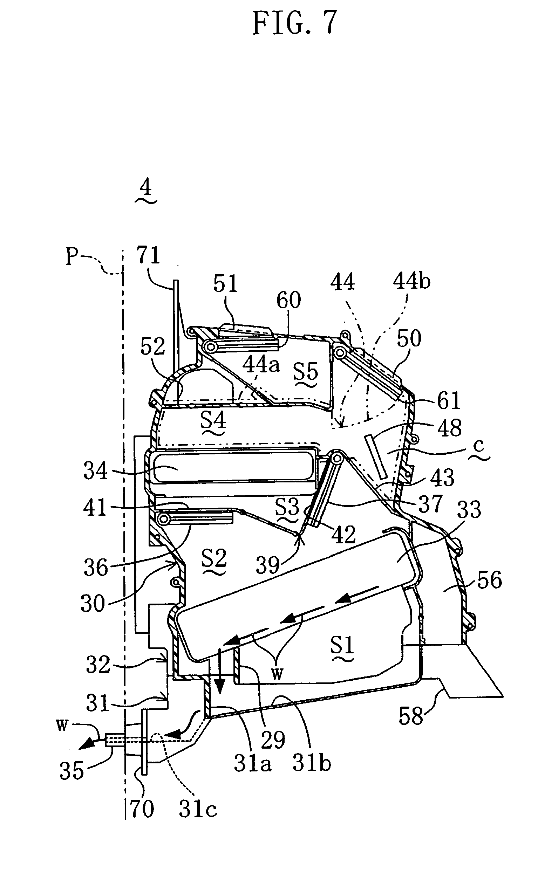

The air conditioning unit **4** is vertically elongated overall, and includes the casing **30** formed into a rectangular box shape having the size greater than the casing **6** of the air blowing unit **3**. The casing **30** is divided into the bottom wall part **31** and the main body **32** located upwardly of the bottom wall part **31**; furthermore, the casing main body **32** is divided into two parts, right and left, in an approximate widthwise center thereof although detailed description will be made later about this. Besides, as shown in FIG. **7**, the casing **30** is provided internally with the evaporator **33** (cooling heat exchanger) as a component of a refrigeration cycle, and the lower face of the evaporator **33** is facing the introduction space **S1**. In addition, the air flow introduced into the introduction space **S1** through the intermediated duct **5** as described above is directed upward in the introduction space **S1** and is then allowed to pass through the evaporator **33**.

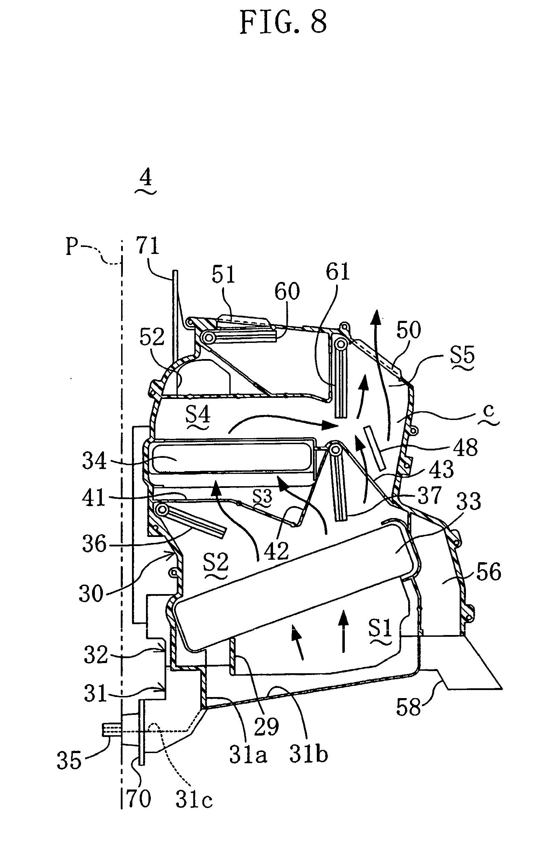

Moreover, provided above the evaporator **33** is a heater core **34** (heating heat exchanger) for heating the air that has passed through the evaporator **33**, and as indicated by the arrows in the FIG. **8**, the air flow that has passed through the evaporator **33** as described above flows upward in the air conditioning unit **4** so that the air flow is temporarily distributed to the heater core **34** or a bypass passage **C** through which the air flow bypasses the heater core **34**, is mixed again to provide a conditioned air, and is then sent toward the cabin via vent outlets **50, 51** and **52** formed at an upper portion of the casing **30** of the air conditioning unit **4**.

The evaporator **33** is a cooling heat exchanger for cooling air from the air blowing unit **3** and is formed by stacking multiple tubes, each formed of a thin plate of metal such as aluminum alloy, to extend in the same direction, and interposing corrugated fins, each likewise formed of a thin metal plate, between the adjacent tubes. Through the tubes of the evaporator **33**, low-temperature refrigerant produced by the refrigeration cycle is circulated, thus cooling air passing through the evaporator **33**. To be more specific, although not shown, the evaporator **33** is provided at both sides of its tubes with tanks communicating with the tubes, and one of the tanks is partitioned into an inflow tank portion and an outflow tank portion by a divider provided at the center of the tank in a stacking direction of the tubes. Refrigerant having flowed into the inflow tank portion flows into the other tank through the upstream side tubes connected to the inflow tank portion, and then the refrigerant flows from the other tank through the downstream side tubes to the outflow tank portion of said one of the tanks.

Furthermore, the evaporator **33** is disposed to extend almost horizontally in the widthwise direction of the car body, to incline in the lengthwise direction of the car body such that a portion of the evaporator **33** closer to the rear of the car body is located at a higher position, and to allow the tubes to extend in the lengthwise direction of the car body. The inflow tank portion and outflow tank portion of the evaporator **33** are each connected with a cooler pipe (not shown), and each cooler pipe is bent to extend from a left wall part of the casing **30** of the air conditioning unit **4** to the outside of the casing **30** and then further extend toward the front of the car body. Since the evaporator **33** is disposed to incline in this manner, condensate produced in the evaporator **33** flows toward the front of the car body mainly along the tubes, drips onto the upper face of the bottom wall part **31** from a front edge of the evaporator, and is then discharged out of the cabin through a drain **35** provided at the bottom wall part **31,** as schematically indicated by the arrows **w** in FIG. **7**.

To be more specific, as shown in FIG. **6** in detail, the upper face of the bottom wall part **31** opposite to the lower face of the evaporator **33** is provided with: a discharge groove **31a** inclined downward from the right-side of the car body toward the left-side of the car body along a front edge of the upper face; and a discharge groove **31b** inclined downward from an edge of the upper face closer to the rear of the car body toward the front of the car body along a left edge of the upper face. Further, a path **31c** is formed to reach the front end of the drain **35** (extended portion) projecting outward from a corner of the bottom wall part **31** located at the left-side and closer to the front of the car body at which the discharge grooves **31a, 31b** join into one. Furthermore, the drain **35** is projected from the corner of the casing bottom wall part **31** in the widthwise direction of the car and is then extended toward the front of the car body. As viewed in the lengthwise direction of the car, the front end of the drain **35** passes through the dash panel **P** at a position thereof located between the air blowing unit **3** and the air conditioning unit **4** and opens into the engine room, and the end of the path **31c** is open at the front end of the drain **35**. Accordingly, the discharge grooves **31a**, **31b** and the path **31c** forms a drain passage through which the condensate dripped from the evaporator **33** onto the upper face of the bottom wall part **31** as described above can be smoothly discharged.

In this embodiment, the reference character **29** in the drawings denotes an air shielding rib (shielding rib) that projects from the upper face of the bottom wall part **31** and extends in the widthwise direction of the car in parallel with the discharge groove **31a.** The air shielding rib **29** is provided so as to separate, from the introduction space **S1,** an inner portion of the air conditioning unit **4** adjacent to the discharge groove **31a** and the front end of the evaporator **33** (which is a relatively lower end of the evaporator **33**). Thus, when an air to be conditioned flows into the introduction space **S1** as indicated by **a1** through **a3** in **FIG. 6,** the flow of this air will not splatter the condensate dripping from the evaporator **33** and the condensate in the discharge groove **31a,** and at the same time the condensate will not make the air flow turbulent. Furthermore, of the air flow introduced into the introduction space **S1,** the flow that turns back along the front wall face of the casing **30** surrounding the introduction space **S1** goes in the same direction as the condensate inside the discharge groove **31a,** and thus the condensate is discharged more smoothly.

The heater core **34** includes stacked tubes and fins like the evaporator **33**, and through the tubes, high-temperature cooling water from the engine is circulated, thus allowing heat exchange between the cooling water and air passing through the tubes and fins. The heater core **34** is provided with heater pipes (not shown) through which engine cooling water flows in and flows out in the same way as the cooler pipes of the evaporator **33**, and each heater pipe is formed to extend outward from the left wall part of the casing **30** and then further extend toward the front of the car body.

Provided between the evaporator **33** and the heater core **34** are two air mix dampers **36, 37** for distributing air flow that has passed through the evaporator **33** to the heater core **34** and/or to the bypass passage **C** and for controlling the temperature of a conditioned air by changing the distribution ratio. Specifically, the inner part of the air conditioning unit **4** located above the evaporator **33** is divided into a plurality of spaces **S2** through **S5** and the bypass passage **C**, for example, with dividers **39** and **40** integrally molded with the inside of the casing **30** as shown in FIGS. **7** and **8**, thus allowing the two air mix dampers **36, 37** to distribute the air flow that has passed through the evaporator **33** to the spaces **S3, S4** that house the heater core **34** therebetween and to the bypass passage **C**.

More specifically, the dividers **39** and **40** are provided in this order from below, i.e., from the air flow upstream side of the air conditioning unit **4**, and the lower divider **39** is provided above the evaporator **33** so as to define the boundary between the evaporator **33** and the heater core **34**. As viewed in the widthwise direction of the car, the lower divider **39** includes: a horizontal wall extending almost horizontally at the front-side of the casing **30** (i.e., at the left-side in **FIG. 7**); a slightly inclined wall that is continuous with the rear end of the horizontal wall and is slightly inclined such that the rear-side of the slightly inclined wall is located at a lower position; a first steeply inclined wall that is continuous with the rear end of the slightly inclined wall and is steeply inclined such that the rear-side of the first steeply inclined wall is located at a higher position; and a second steeply inclined wall that is continuous with the first steeply inclined wall and is steeply inclined such that the rear-side of the second steeply inclined wall is located at a lower position.

Further, the horizontal wall and the first steeply inclined wall are formed with openings **41, 42** through which the space **S2** located above the evaporator **33** and the space **S3** located under the heater core **34** communicate with each other, respectively, and the second steeply inclined wall is formed with an opening **43** for the bypass passage **C**. The openings **41**, **42** and **43** are opened and closed by the air mix dampers **36** and **37**. Furthermore, the first steeply inclined wall of the lower divider **39** defines the boundary between the bypass passage **C** and the space **S3** under the heater core **34** and space **S4** above the heater core **34,** and at the same time has the function of supporting the rear end of the heater core **34.**

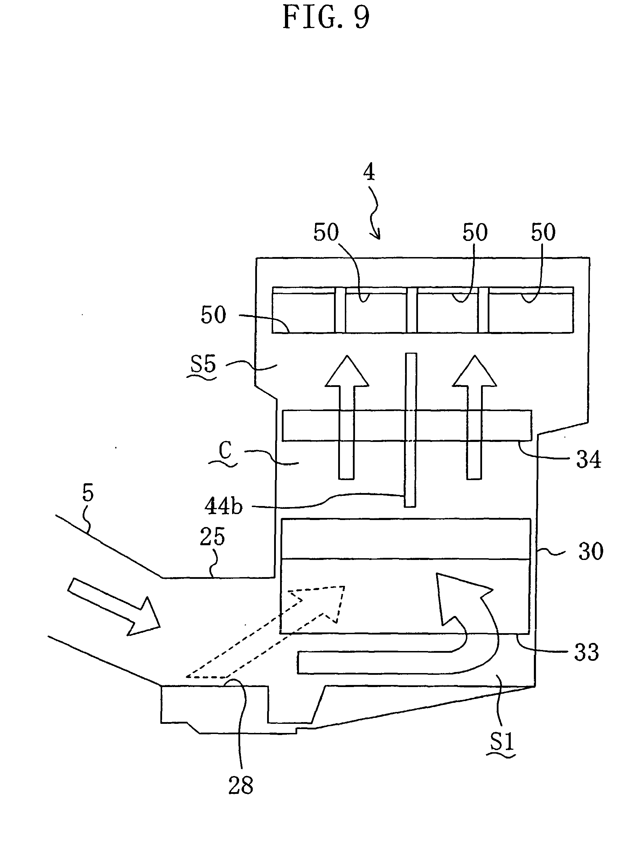

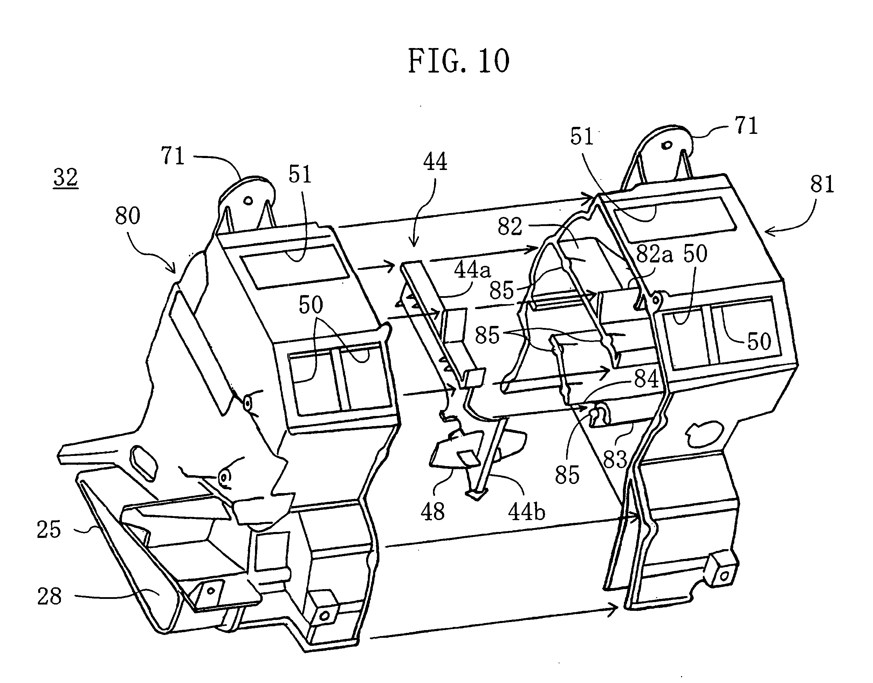

On the other hand, provided above the heater core **34** is the upper divider **40** that covers the entire heater core **34** and defines the boundary between the space **S4** above the heater core **34** and the guide space **S5** for guiding a conditioned air at the upper portion of the casing **30.** Although it will be explained in detail later, the upper divider **40** includes a pair of ribs **82**, **82** (see FIG. **10**) extending inwards the casing **30** from right and left, and the pair of the ribs **82**, **82** are connected to each other at their ends via an intermediate connecting member **44** (indicated by the virtual line in FIG. 7). Although the intermediate connecting member **44** will be also described in detail later, the member **44** extends in the lengthwise direction of the car body, and the front and rear ends of the member **44** are each engaged with and fixed to the casing **30.** Thus, not only the stiffness of the casing **30** is increased, but also the boundary is defined between the right-side and left-side of the inner portion of the casing **30** from the space **S4** above the heater core **34** to the bypass passage **C.** To be more specific, through a main body **44a** of the intermediate connecting member **44,** the ends of the ribs **82, 82** are connected to each other in the space **S4** above the heater core **34,** and a flow divider **44b** provided at the rear-side of the main body **44a** extends upward and downward from an inner portion of the air conditioning unit **4** through which the space **S4** above the heater core and the bypass passage **C** communicate with each other, so as to define the boundary between the right-side and left-side of the bypass passage **C**. As schematically shown in FIG. **9,** air flowing upward through the bypass passage **C** is divided into two, right and left, with the flow divider **44b.**

Furthermore, the flow divider **44b** of the intermediate connecting member **44** is provided with an adjusting fin **48** (indicated by the solid line in FIGS. **7** and **8**) extending right and left so that the flow divider **44b** substantially takes the form of a cross as view in the vertical direction. As viewed from either the right-side or left-side of the car body, the adjusting fin **48** is inclined such that an upper portion thereof is closer to the front of the car body, i.e., closer to the heater core **34**. As indicated by the arrows in FIG. **8**, the adjusting fin **48** adjusts the air flowing through the bypass passage **C** and gradually directs the air toward the space **S4** above the heater core.

The two air mix dampers **36**, **37** each have a shaft extending in the widthwise direction of the car like the indoor air/outside air switching damper **12**, and both ends of each shaft are supported at the casing **30**. And shaft ends of the air mix dampers **36, 37** toward the left of the car body are connected with an actuator **45** so that the air mix dampers **36, 37** are actuated. To be more specific, the actuator **45** is provided at the left wall part of the casing **30,** is fixed to bosses provided at the casing like the actuator **15** for the indoor air/outside air switching damper **12**, and allows the two air mix dampers **36**, **37** to move conjointly through the link mechanism **46** that is also provided at the wall face of the casing. The front-side air mix damper **36** rotates from a position for fully opening the opening **41** of the horizontal wall to a position for fully closing the opening **41.** On the other hand, the rear-side air mix damper **37** rotates reversely from a position for fully opening the opening **42** of the first steeply inclined wall and for fully closing the opening **43** of the second steeply inclined wall to a position for fully closing the opening **42** and for fully opening the opening **43**.

Then, as shown in the solid line in FIG. **7,** when the front-side air mix damper **36** fully closes the opening **41,** the rear-side air mix damper **37** fully closes the opening **42** and fully opens the opening **43,** in which case all the air that has passed through the evaporator **33** flows through the bypass passage **C**. To the contrary, when the front-side air mix damper **36** fully opens the opening **41**, the rear-side air mix damper **37** fully opens the opening **42** and fully closes the opening **43,** in which case all the air that has passed through the evaporator **33** is lead to the heater core **34** via the space **S3.** Furthermore, as shown in FIG. **8,** when the two air mix dampers **36, 37** each assume an intermediate position between the above-described two states, the air flow that has passed through the evaporator **33** is distributed to the heater core **34** and the bypass passage **C** in accordance with the positions of the air mix dampers **36, 37**.

As indicated by the arrows in FIG. **8**, once the air flow has distributed to the heater core **34** and the bypass passage **C** in this manner, relatively cool air flows smoothly upward through the bypass passage **C**, while relatively warm air that has passed through the heater core **34** is sharply turned toward the rear of the car body in the space **S4** above the heater core **34** and is lead out to the bypass passage **C.** In other words, the space **S4** above the heater core **34** functions as a guide passage which covers the heater core **34** and through which the air having been passed through the heater core **34** is guided to the bypass passage **C**.

In this embodiment, the intermediate connecting member **44** is provided across an inner portion of the air conditioning unit **4** from the space **S4** above the heater core to the bypass passage **C** and defines the boundary between the right-side and left-side of the bypass passage **C** with the flow divider **44b** of the intermediate connecting member **44**. Therefore, as schematically shown in FIG. **9**, the relatively cool air flowing upward through the bypass passage **C** is divided into two, right and left, in the air conditioning unit **4** before meeting with the warm air lead out from the space **S4** above the heater core. Thus, the deflection of air flow to right or left in the bypass passage **C** is alleviated, and is substantially at the same level as the deflection of air flow, passing through the heater core **34**, to right or left. Accordingly, the temperature distribution of the conditioned air in which the cool air and warm air are mixed is substantially uniformized in the right-side and left-side of the air conditioning unit **4**.

Besides, with the adjusting fin **48** provided at the flow divider **44b** of the intermediate connecting member **44**, the relatively warm air, flowing upward through the bypass passage **C,** is turned toward the space **S4** above the heater core, and collides, at an appropriate angle, against the relatively warm air that flows from the space **S4** to join the air flowing through the bypass passage **C.** Thus, it is possible to keep air flow that is directed upward overall from becoming turbulent, and to sufficiently mix the cool air flowing through the bypass passage **C** and the warm air flowing from the heater core **34,** thereby obtaining the conditioned air in which temperature distribution is uniformized.

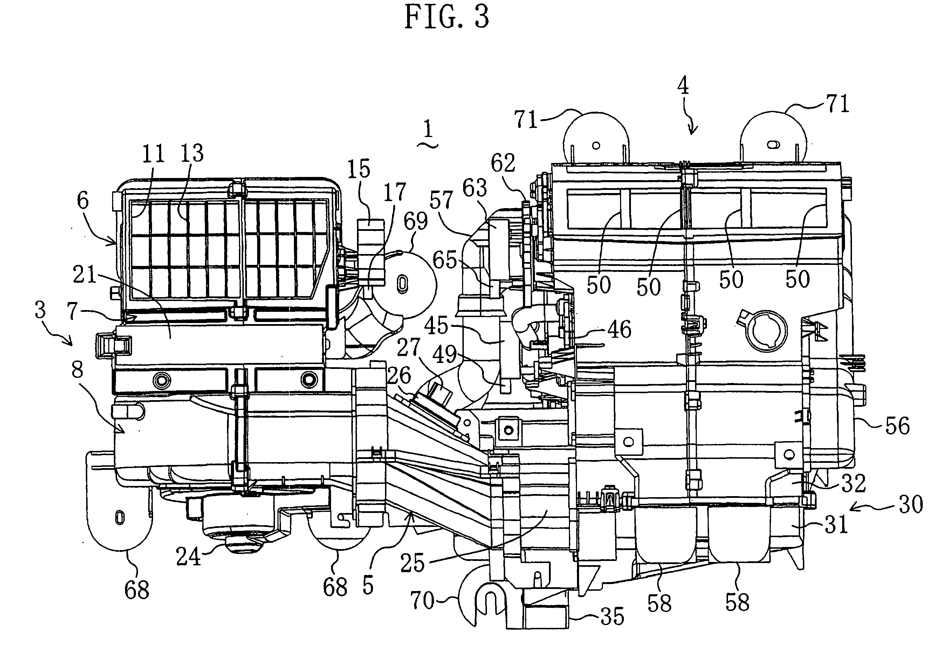

It should be noted that as shown in FIGS. **3** and **5**, the actuator **45** for the air mix dampers **36, 37** is provided, like the actuator **15** for the indoor air/outdoor air switching damper **12**, with a coupler **49** to which a line from the air-conditioning control section is to be connected. Also, although not shown, the evaporator **33** and the heater core **34** are each provided with a sensor for detecting the temperature state, and each signal line from the sensors extends to pass through the left wall part of the air conditioning unit **4** and is connected to the air-conditioning control section.

Further, as described above, the conditioned air obtained as a result of heat exchange performed on an air to be conditioned by using the evaporator **33** and/or the heater core **34** is distributed to a plurality of ducts through the guide space **S5** at the upper portion of the casing **30** and is then supplied to the cabin. Furthermore, the upper portion of the casing **30** of the air conditioning unit **4** is formed, at an inclined part thereof closer to the rear of the car body, with vent outlets **50, 50,** ···, and is formed, at a substantially horizontal part thereof closer to the front of the car body, with defrost outlets **51, 51.** In addition, the upper portion of the casing **30** is formed, at the left wall part and right wall part thereof, with a foot outlet **52** (only one on the right is shown in FIG. 7).

The vent outlets **50, 50,** ··· are each connected with one end of the associated one of the ducts not shown, and the other end of the duct is connected to the associated one of vent grills **53, 53,** ··· (see FIG. **4)** provided in the instrument panel **2.** Thus, the conditioned air sent from each vent outlet **50** is mainly discharged to the bust of the car's occupant through the vent grills **53**, **53,** ···. On the other hand, like the vent outlet 50, the defrost outlets **51, 51** are connected via ducts (not shown) to defrost grills **54, 54** provided in the instrument panel **2**. Thus, the conditioned air sent from each defrost outlet **51** is discharged toward an inner face of a front window. In addition, the right and left foot outlets **52, 52** are connected with upper ends of downwardly extending ducts **56, 57,** respectively, and both the ducts **56, 57** are provided at lower ends thereof with openings **55** (only shown in FIG. **2**) which are opened near the legs of the driver and passenger under the instrument panel **2**, respectively, thus discharging the conditioned air to the legs of the car's occupants from the openings.

It should be noted that of the ducts **56, 57** connected to the foot outlets **52, 52,** the duct **56** in front of the driver's seat is provided integrally with the casing **30** to run around from the right wall part of the casing **30** to a rear wall part of the casing **30**, has a relatively large cross section, and is formed as a dual-purpose duct also used for a backseat through which the conditioned air for the occupant in the backseat also passes. Furthermore, a lower end of the dual-purpose duct **56** is connected to connections **58, 58** integrally molded with the bottom wall part **31** of the casing **30**, and is connected to an end of a floor duct not shown through the connections.

In the guide space **S5** at the upper portion of the casing **30,** provided in the same way as the air mix dampers **36, 37** are two discharge direction switching dampers **60, 61** for changing the discharge direction of the conditioned air by opening and closing the outlets **50, 51, 52,** and the dampers **60, 61** are actuated by a link mechanism 62 provided on the left wall part of the casing **30** of the air conditioning unit **4** and an actuator **63** fixed to a boss on the left wall part.

Of the discharge direction switching dampers **60, 61,** the front-side one is a defrost damper **60** for opening and closing the defrost outlets **51, 51,** and the rear-side one is a vent damper **61** for opening and closing the vent outlets **50, 50**, ···. The dampers **60, 61** are moved conjointly through the link mechanism **62** and are each driven by the actuator **63** to open the associated outlets in accordance with respective discharge modes. That is, the air conditioning unit **4** can change the opened/closed state of the two dampers **60, 61** to switch its discharge mode among various modes such as a vent mode in which the conditioned air is mainly discharged through the vent outlets **50, 50,** ···, a defrost mode in which the conditioned air is mainly discharged through the defrost outlets **51, 51,** a foot mode in which the conditioned air is mainly discharged through the foot outlets **52, 52,** and a bilevel mode in which the conditioned air is discharged through the vent and foot outlets **50**, **52**. Further, like the actuator **15** for the indoor air/outside air switching damper **12**, the actuator **63** for the discharge direction switching dampers **60, 61** is provided with a coupler **65** (shown only in FIG. **3** and FIG. **5**) to which a signal line from the air-conditioning control section is connected.

It should be noted that in order to install the air conditioner **1** formed as described above into the dash panel **P** of the car, the air blowing unit **3** is provided with brackets **68**, **68** at the right-side and left-side of the blowing section **8**, and is also provided with a bracket **69** obliquely extending from the right of the filter disposition space **21** toward the right of the car body. On the other hand, the fittings for the air conditioning unit **4** include a bracket **70** formed integrally with the bottom wall part **31** of the casing **30,** and brackets **71, 71** provided to make a pair at both sides, right and left, of the upper portion of the casing **30.**

### -ASSEMBLY OF CASING MAIN BODY-

Hereinafter, the dividing and assembly of the structure of the casing main body **32** of the air conditioning unit **4** will be described with reference to FIGS. **10** through **12.**

As described above, the casing **30** of the air conditioning unit **4** is formed into a rectangular box shape vertically elongated overall, and includes: the large-sized casing main body **32** that can accommodate not only the evaporator **33** and the heater core **34** but also the air mix dampers **36, 37** and the discharge direction switching dampers **60, 61**; and the bottom wall part **31** for sealing an opening at the lower end of the casing main body **32**. Further, this large-sized casing main body **32** is divided, in an approximate widthwise center thereof, into two parts, i.e., a left casing member **80** located at the left-side and a right casing member **81** located at the right-side. The left and right casing members **80** and **81** can be connected to each other at their brim portions like a mortise and tenon in which connecting parts of the casing members **80** and **81** are formed with grooves and convex portions and the associated grooves and convex portions are engaged with each other.

However, since the large-sized casing main body **32** is divided into two parts, right and left, in this manner, the left and right casing members **80, 81** each have a very large opening, which makes it difficult to secure a sufficient stiffness. Therefore, when the two casing members **80, 81** are fitted to each other, it is hard to precisely align the brim portions thereof, and thus the assembly workability might be impaired.

To cope with this, in this embodiment, the left and right casing members **80, 81** are each provided with a plurality of ribs **82** and **83** each extending opposite to its counterpart, the ends of the associated ribs are connected to each other, and the intermediate connecting member **44** extending from the front end of the casing members **80, 81** to the rear end of the casing members **80, 81** is provided to increase the stiffness of the casing members **80, 81**, thus allowing the assembly thereof to be carried out easily.

Specifically, as shown in FIG. **10,** the left and right casing members **80, 81** are each provided internally with three ribs **82, 83** and **84** (only the ribs provided in the right casing member **81** are shown) each extending opposite to its counterpart in an intermediate portion of the casing main body **32** located between the upper end and the lower end thereof so that the associated ribs can be coupled to each other. That is, of the three ribs **82, 83** and **84,** the rib **82** is located at a highest position, and the ends of the ribs **82** are connected to each other via the main body **44b** of the intermediate connecting member **44** and forms, with the intermediate connecting member **44**, the upper divider **40** located above the heater core **34.** Each rib **82** is provided at its upper face with a protrusion **82a** inclined and extended obliquely upward. Furthermore, the two ribs **83, 84** located below the rib **82** integrally form the lower divider **39**.

It should be noted that the ends of the ribs **82, 83** and **84** are provided at predetermined positions thereof with circular receivers **85, 85**, ··· each having a diameter slightly larger than the thickness of its rib main body. When the molded casing members **80, 81** are removed out of a mold by using a pre-ejector pin, the receivers **85, 85,** ··· are pressed by the tip of the pin. Since the receivers **85, 85,** ··· are provided, the ribs **82** through **84** can be satisfactorily removed out of a mold, thus improving the workability.

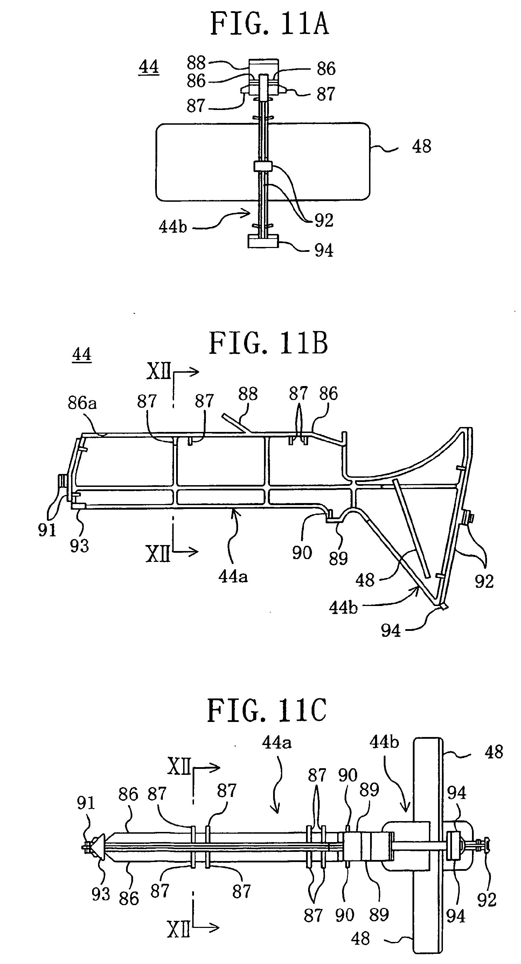

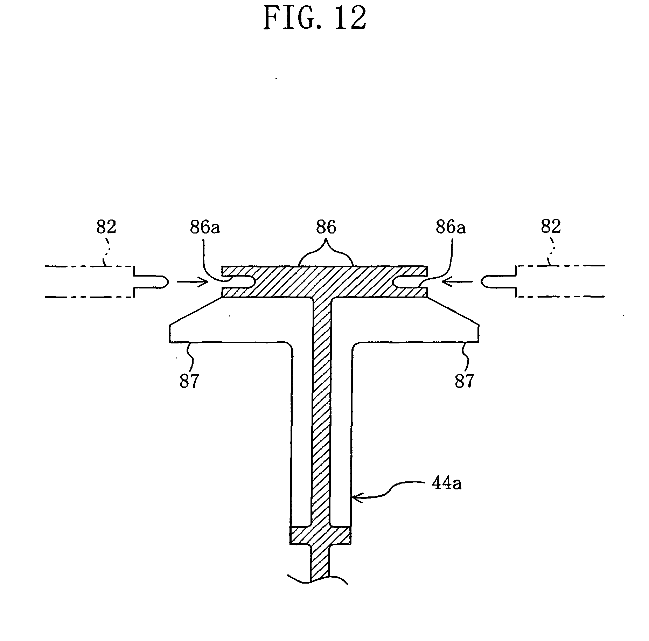

On the other hand, as shown in detail in **FIG. 11,** the intermediate connecting member **44** includes: the main body **44a** formed into a substantially rectangular plate elongated in the lengthwise direction of the intermediate connecting member **44;** and the substantially triangular flow divider **44b** continuous with the front side end of the main body **44a** (the right end of the main body **44a** in FIG. (**b**)**,** i.e., the end of the main body **44a** closer to the rear of the car body), and the intermediate connecting member **44** has a symmetrical shape. As shown in FIG. **12,** the main body **44a** is further provided with an extended wall part **86, 86** extending toward right and left along an upper edge of the main body **44.** The extended wall part **86** is provided at its each end with a groove **86a** (engagement portion shown only in FIG. **12**), and each groove **86a** is to be engaged with the associated convex portion (not shown) formed along the end of the rib **82**.

Further, provided under the extended wall part **86** is a plurality of protrusions **87, 87,** ··· each extending to right or left at a predetermined position of the main body **44a** and protruding more outwardly than the extended wall part **86.** Each protrusion **87** extends along a lateral face of the main body **44a** and a lower face of the extended wall part **86,** and an upper edge of each protrusion **87** extends away from the associated end of the extended wall part **86** and further outward and is provided with an inclined part **87a** inclined downward to the tip of the protrusion **87**. When the intermediate connecting member **44** and the rib **82** are fitted to each other, each inclined part **87a** serves as a guide for guiding the convex portion at the end of the rib **82** to the associated groove **86a** at the end of the extended wall part **86.** It should be noted that although not shown, a plurality of protrusions having similar inclined parts are also provided at the ends of ribs **82** of the casing members **80, 81.**

On the other hand, provided on the extended wall part **86** is a protrusion **88** that protrudes obliquely upward so as to correspond to the protrusions **82a** of the ribs **82** of the casing members **80, 81,** and the protrusion **88** is also provided at its each side part with a groove **88a** like the extended wall part **86** so that each groove **88a** is engaged with the associated protrusion formed at a side part of the protrusion **82a** of the rib **82.**

Besides, a portion of the intermediate connecting member **44** located below the main body **44a** and connecting the main body **44a** to the flow divider **44b** is provided with a curved extended wall part **89** extending right and left like the above-described upper extended wall part **86** so as to form a curved shape in this portion. Although not shown, the extended wall part **89** is also provided at its ends with grooves (engagement portions), and the grooves are to be engaged with the convex portions at the ends of the ribs **83** of the casing members **80, 81**. Moreover, provided along an upper face of the extended wall part **89** is a protrusion **90** (guide) having the same shape and function as the above-described protrusion **87.**

In addition, engagement and fixation parts **91, 92** to be engaged with and fixed to the brim portions of the casing members **80, 81** are provided at front and rear ends of the intermediate connecting member **44,** i.e., the back side end of the main body **44a** (the left end of the main body **44a** in FIG. (**b**), i.e., the end of the intermediate connecting member **44** closer to the front of the car body) and the front side end of the flow divider **44b** (the right end of the flow divider **44b** in FIG. (**b**), i.e., the end of the flow divider **44b** closer to the rear of the car body), respectively. The engagement and fixation parts **91, 92** each include a convex portion and a protuberance that are to be sandwiched between the brim portions of the two casing members **80, 81,** and furthermore, the intermediate connecting member **44** is provided, at its portions adjacent to lower ends of the convex portions, with protrusions **93** and **94** each functioning as a guide at the time of assembly like the above-described protrusions **87, 90**.

In this arrangement, when the left and right casing members **80, 81** are fitted to each other, first, the intermediate connecting member **44** is fitted to one of the casing members (hereinafter, description will be made by taking the right member **81** as an example). To be more specific, the engagement and fixation part **91** at the front end of the main body **44a** of the intermediate connecting member **44** is engaged with the front-side brim portion of the casing member **81,** while the engagement and fixation part **92** at the rear end of the flow divider **44b** is engaged with the rear-side brim portion of the casing member **81,** and furthermore, the extended wall parts **86, 89** of the intermediate connecting member **44** and the ribs **82, 83** of the casing member **81** are engaged with each other. In this case, the plurality of protrusions **87,** ···, **90,** ··· provided at the extended wall parts **86**, **89** and the ribs **82, 83** guide the ends of the ribs **82, 83** to the grooves of the extended wall parts **86, 89,** thereby easily engaging the ribs **82, 83** with the extended wall parts **86, 89**. Thus, the intermediate connecting member **44** can be fitted to the casing member **81** very easily.

Since the intermediate connecting member **44** can be fitted to the casing member **81** in this manner, it is possible to increase the stiffness of the right casing member **81,** and in particular, it is possible to sufficiently secure the stiffness of the brim portion of the right casing member **81** which is surrounding the opening thereof and is to be connected to the left casing member **80**. Besides, the brim portion of the right casing member **81** and that of the left casing member **80** are to be aligned in the substantially same virtual plane, and the intermediate connecting member **44** is also to be aligned in this virtual plane. The left casing member **80** is fitted to the right casing member **80** to which the intermediate connecting member **44** has been fitted as described above. In this case, the ribs **82, 83** of the left casing member **80** are fitted to the intermediate connecting member **44,** fitted to the right casing member **81** as described above, as the target. Thus, the plurality of protrusions **87**, ···, **90,** ··· provided, for example, at the end of the rib **82** and the extended wall part **86** of the intermediate connecting member **44** guide the ends of the ribs **82, 83** to the grooves of the extended wall parts **86, 89,** thereby engaging the ribs **82, 83** with the extended wall parts **86, 89.** As a result, even if the ribs and the casing members **80, 81** are distorted when they are molded, the casing members **80, 81** can be fitted to each other easily.

In other words, the present invention employs a simple arrangement in which the two casing members **80, 81,** each having a large opening, are provided with the ribs **82, 83** that make pairs, and in which the ends of the ribs **82, 83** are connected to each other by guiding them with the intermediate connecting member **44,** thus making it possible to fit the members **80, 81** to each other with ease and certainty.

### -FLOW OF AIR TO BE CONDITIONED-

Next, the flow of an air to be conditioned in the air conditioner **1** formed as described above will be described. First, on the whole, air flow sent from the air conditioning unit **3** flows obliquely downward through the intermediate duct **5** from left to right in the widthwise direction of the car, and reaches the duct connecting section **25** as indicated by the arrows in FIG. **5**. Then, as shown in FIGS. **6** and **9,** the air flow is smoothly directed upward along the passage within the duct connecting section **25,** and becomes a substantially horizontal flow to flow into the introduction space **S1** of the air conditioning unit **4.**

Since the air flow is introduced into the introduction space **S1** substantially horizontally in this manner, this flow does not violently collide against the upper face of the bottom wall part **31** of the air conditioning unit **4**, thus preventing the occurrence of high turbulence and the splatter of condensate. Further, since the air shielding rib **29** shields, from the introduction space **S1,** the front end of the evaporator **33** from which condensate drips down, the condensate will not make the air flow turbulent.

Furthermore, the main stream of the air flow, introduced almost horizontally into the introduction space **S1** as described above, collides against a sidewall of the casing **30** located at the right-side of the car body and surrounding the introduction space **S1,** and is then turned upward as indicated by the thick white arrow in FIG. **9.** On the other hand, part of the air flow directed upward by the bottom face **28** of the passage within the duct connecting section **25** goes directly to evaporator **33** as indicated by the thick arrow drawn with a dotted line in FIG. **9,** and this flow joins the main stream that goes upward in the introduction space **S1** as described above, thus further alleviating the deflection of the air flow to right or left in the evaporator **33.**

To be more specific, by providing the substantially horizontally extending duct connecting section **25** between the intermediate duct **5** extending obliquely from left to right and the introduction space **S1,** the air flow, introduced from the intermediate duct **5** to the introduction space at the lower end of the air conditioning unit **4,** is prevented from becoming turbulent, thus improving the air blowing efficiency. Further, since the deflection of the air flow, directed upward from the introduction space, to right or left is alleviated, it is possible to improve the uniformity of flow distribution in the evaporator **33**. Furthermore, it is possible to prevent the splatter of condensate in the introduction space **S1**.

Then, as indicated by the arrows shown in FIG. **8,** for example, the air flow having been passed through the evaporator **33** is distributed to the heater core **34** and the bypass passage **C** in accordance with the degree of opening allowed by the air mix dampers **36**, **37**. In this case, as indicated by the arrows shown in FIG. **9**, relatively cool air flow going upward through the bypass passage **C** is divided into two, right and left, by the flow divider **44b** of the intermediate connecting member **44**, thus further alleviating the deflection of the air flow to right or left. Besides, as shown in FIG. **8,** the air flow going upward through the bypass passage **C** is guided by the adjusting fin **48** and is directed to get close to the heater core **34.**

On the other hand, relatively warm air flow having been passed through the heater core **34** is lead out from the space **S4** above the heater core to the bypass passage **C** as indicated by the arrow in FIG. **8,** and then collides, at an appropriate angle, against the relatively cool air flow that has been guided by the adjusting fin **48** as described above, thus sufficiently mixing the warm air flow and the cool air flow to provide the conditioned air in which the temperature distribution is uniformized. Thereafter, the conditioned air passes through the guide space **S5** and is discharged to the cabin via the ducts **50, 51, 52,** ···, Meanwhile, the deflection of the cool air flow in the bypass passage **C** is sufficiently alleviated as described above, and the degree of the deflection is almost similar to that of the deflection of the warm air flow from the heater core **34**; thus, the temperature state of the conditioned air, in which the cool air and the warm air are mixed, is substantially uniform in the right-side and left-side of the air conditioning unit **4**.

As described above, in the vehicle air conditioner **1** according to the present embodiment, first, the casing main body **32** of the air conditioning unit **4** is divided into two parts, right and left, in an approximate widthwise center thereof to provide the two casing members **80, 81** each having a large opening, thus reducing the number of components to cut down the cost. In this embodiment, the brim portions of the left and right casing members **80, 81** are aligned in the substantially same virtual plane, and the intermediate connecting member **44,** functioning as a guide when the two members **80, 81** are fitted to each other, is provided so that the intermediate connecting member **44** is also aligned in the same virtual plane. Thus, the two members **80, 81** can be fitted to each other very easily.

Further, in the air conditioner **1** according to the present embodiment, the duct connecting section **25** is provided between the passage within the intermediate duct **5** and the introduction space **S1** so that the air, flowing through the intermediate duct **5** from one side of the car in the widthwise direction thereof to the introduction space **S1** at the lower end of the air conditioning unit **4,** is directed upward before the air flow reaches a position below the evaporator **33.** Thus, it is possible to introduce the main stream of the air flow almost horizontally into the introduction space **S1** to improve the air blowing efficiency, and at the same time, it is possible to alleviate the deflection of the air flow that goes upward from the introduction space **S1** and passes through the evaporator **33,** thus increasing the heat exchange efficiency.

Furthermore, the evaporator **33** is inclined so as to allow condensate to drip from a portion of the evaporator **33** adjacent to its front end, and the air shielding rib **29** shields the portion of the evaporator **33** adjacent to its front end from the air flow in the introduction space **S1;** thus, the condensate is prevented from splattering against the evaporator **33,** which can also improve the heat exchange efficiency.

Besides, the air conditioner **1** according to the present embodiment alleviates the deflection of the air flow, passing through the evaporator **33**, to right or left as described above, and in addition uses the flow divider **44b** of the intermediate connecting member **44** provided in the approximate center of the casing main body **32** to divide, in particular, the air flow going upward through the bypass passage **C** into two, right and left, thus further alleviating the deflection of the flow to right or left. This also makes it possible to improve the heat exchange efficiency and to substantially uniformize the temperature distribution of the conditioned air in the right-side and left-side of the air conditioning unit **4**. Accordingly, the temperature state of the conditioned air supplied from the air conditioning unit **4** to the cabin via ducts is roughly the same in the right-side and left-side of the cabin, and a temperature variation due to the change of the quantity of air will not be caused, thus achieving favorable usability.

### -OTHER EMBODIMENTS-

It should be noted that although the air conditioner **1** formed to be installed into a right-hand drive car has been described in the above-described embodiment, the air conditioner **1** according to the present invention may be applied to a left-hand drive car. In such an embodiment, one side of the car in the widthwise direction thereof is the right-side of the car body, and the other side is the left-side of the car body. Further, in such a case, although it is sufficient that the air blowing unit **3** is disposed in front of a passenger's seat at the right-side of the car body and is connected to the air conditioning unit **4** via the intermediate duct **5** like the above-described embodiment, the air blowing unit **3** and the air conditioning unit **4** each assume a shape in which right-side and left-side parts are opposite to those in the above-described embodiment.

Furthermore, the casing main body **32** of the air conditioning unit **4** in which the right-side and left-side parts are reversed in this manner is divided into two, i.e., right and left members, like the above-described embodiment, and brim portions and ribs of the members are made similar in shape to those in the above-described embodiment. In this case, since the intermediate connecting member **44** itself has a symmetrical shape, the intermediate connecting member **44** can be applied to both a right-hand drive car and a left-hand drive car, which allows mass production and thus cuts down the cost of components.

## Claims

1. A vehicle air conditioner (1), in which an air conditioning unit (42) and an air blowing unit (3) are juxtaposed in a widthwise direction of a car, air sent from the air blowing unit (3) is introduced into an introduction space at a lower end of the air conditioning unit (4) to allow the air to flow upward in the air conditioning unit (4), and heat exchange is carried out using a cooling heat exchanger (33) disposed in the air conditioning unit (4) and/or a heating heat exchanger (34) disposed above the cooling heat exchanger, thus producing a conditioned air, the vehicle air conditioner **characterized in that**:
the cooling heat exchanger (33) is disposed to allow its lower face to face the introduction space of the air conditioning unit (4) and is disposed to extend almost horizontally in the widthwise direction of the car, and the lower face is disposed to incline in the lengthwise direction of the car body such that the rear of the cooling heat exchanger (33) is located at a higher position, and to allow tubes to extend in the lengthwise direction of the car body;
the air blowing unit (3) is disposed in the widthwise direction of the car and next to the air conditioning unit (4);
an air duct (5) extending from the air blowing unit to the lower end of the air conditioning unit is disposed to incline downward from the air blowing unit to the air conditioning unit;
the air conditioning unit (4) and/or the air duct (5) are/is provided with an air flow directing section for directing air flow upward at a portion of the air conditioning unit (4) and/or the air duct (5) which is located closer to the air blowing unit (3) disposed in the widthwise direction of the car than said one side end of the cooling heat exchanger in the widthwise direction of the car; and
the upper face of the bottom wall part of the air conditioning unit (4) opposite to the lower face of the cooling heat exchanger (33) is provided with a discharge groove (31 a) along a front edge of the upper face, and with an air shielding rib (29) that projects above and extends in the widthwise direction of the car body along the discharge groove (31a) so as to separate, from the introduction space, the discharge groove (31a) and the vicinity of the front edge of the cooling heat exchanger (33).

2. The vehicle air conditioner according to claim 1, **characterized in that** the air flow directing section comprises a flat face that is continuous with a lower wall face of the air duct passage and extends almost horizontally in the widthwise direction of the car.

3. The vehicle air conditioner according to claim 1, **characterized in that** the heating exchange (34) is disposed relatively closer to the front of the car body in the air conditioning unit (4), and the air conditioning unit (4) is provided, at an inner portion thereof located behind the heating heat exchanger (34) and closer to the rear of the car body, with a passage for allowing air flow that has passed through the cooling heat exchanger (33) to bypass the heating heat exchanger (34) and go downstream thereof.

4. The vehicle air conditioner according to claim 1, **characterized in that**:
a bottom wall part (31) of a casing (30) for the air conditioning unit (4) is formed with an extended portion that extends outward from a corner of the bottom wall part located at said one side end thereof in the widthwise direction of the car and closer to the front of the car body; and
a drain passage that extends from an upper face of the bottom wall part (31) of the casing to pass through the extended portion and go outside the casing is provided.

5. The vehicle air conditioner according to claim 4, **characterized in that**:
the extended portion protrudes in the widthwise direction of the car from the bottom wall part (31) of the casing (30) of the air conditioning unit (4) and then extends toward the front of the car body so that, as viewed in the lengthwise direction of the car body, a front end of the extended portion passes through a dash panel of the car at a position located between the air conditioning unit (4) and the air blowing unit (3); and
a downstream end of the drain passage is open at the front end of the extended portion.

6. The vehicle air conditioner according to claim 1, **characterized in that** an upstream end of the drain passage through which condensate from the cooling heat exchanger (33) is discharged outside of the casing is open at a portion of an upper face of a bottom wall part of a casing for the air conditioning unit located closer to the front of the car body than the shielding rib (29).

7. The vehicle air conditioner according to claim 6, **characterized in that**:
the bottom wall part (31) of the casing (30) of the air conditioning unit (4) is formed with an extended portion that protrudes in the widthwise direction of the car from a corner of the bottom wall part located at said one side of the car in the widthwise direction thereof and closer to the front of the car body and then extends toward the front of the car body so that, as viewed in the lengthwise direction of the car body, a front end of the extended portion passes through a dash panel of the car at a position located between the air conditioning unit and the air blowing unit; and
a downstream end of the drain passage that extends from the upper face of the bottom wall part of the casing and longitudinally passes through the extended portion is open at the front end of the extended portion.

## Patentansprüche

1. Fahrzeugklimaanlage (1), in der eine Klimaanlageneinheit (4) und eine Luftgebläseeinheit (3) in Querrichtung eines Fahrzeugs nebeneinander angeordnet sind, wobei von der Luftgebläseeinheit (3) abgegebene Luft in einen Einlassraum am unteren Ende der Klimaanlageneinheit (4) eingebracht wird, um der Luft zu erlauben, nach oben in die Klimaanlageneinheit (4) zu strömen, und wobei ein Wärmeaustausch erfolgt, wozu ein in der Klimaanlageneinheit (4) angeordneter Kühlwärmetauscher (33) und/oder ein oberhalb des Kühlwärmetauschers angeordneter Heizwärmetauscher (34) verwendet werden, so dass klimatisierte Luft erzeugt wird, wobei die Fahrzeugklimaanlage **dadurch gekennzeichnet ist, dass**
der Kühlwärmetauscher (33) so angeordnet ist, dass seine Unterseite dem Einlassraum der Klimaanlageneinheit (4) gegenüberliegen kann, und so angeordnet ist, dass er sich in Querrichtung des Fahrzeugs fast horizontal erstreckt, und dass die Unterseite so angeordnet ist, dass sie in Längsrichtung der Fahrzeugkarosserie so geneigt ist, dass sich der hintere Bereich des Kühlwärmetauschers (33) in einer höheren Position befindet, und dass sich Leitungen in Längsrichtung der Fahrzeugkarosserie erstrecken können;
dass die Luftgebläseeinheit (3) in Querrichtung des Fahrzeugs und neben der Klimaanlageneinheit (4) angeordnet ist;
dass eine sich von der Luftgebläseeinheit zum unteren Ende der Klimaanlageneinheit erstreckende Luftführung (5) so angeordnet ist, dass sie von der Luftgebläseeinheit zur Klimaanlageneinheit hin nach unten geneigt ist;
dass die Klimaanlageneinheit (4) und/oder die Luftführung (5) mit einem Luftstrom-Leitabschnitt zum Leiten des Luftstroms nach oben versehen ist, der an einem Abschnitt der Klimaanlageneinheit (4) und/oder der Luftführung (5) angeordnet ist, der näher bei der in Querrichtung des Fahrzeugs angeordneten Luftgebläseeinheit (3) positioniert ist als das eine seitliche Ende des Kühlwärmetauschers in Querrichtung des Fahrzeugs; und
dass die Oberseite des unteren Wandteils der Klimaanlageneinheit (4) gegenüber der Unterseite des Kühlwärmetauschers (33) mit einer sich entlang einer Vorderkante der Oberseite angeordneten Ablaufrinne (31a) und mit einer oberhalb davon hervorstehenden und sich in Querrichtung der Fahrzeugkarosserie entlang der Ablaufrinne (31 a) erstreckenden Luftabschirmrippe (29) versehen ist, um die Ablaufrinne (31a) und den Nahbereich der Vorderkante des Kühlwärmetauschers (33) vom Einlassraum zu trennen.

2. Fahrzeugklimaanlage nach Anspruch 1, **dadurch gekennzeichnet, dass** der Luftstrom-Leitabschnitt eine Flachseite umfasst, die unmittelbar an eine untere Wandseite des Luftführungsdurchgangs anschließt und sich in Querrichtung des Fahrzeugs fast horizontal erstreckt.

3. Fahrzeugklimaanlage nach Anspruch 1, **dadurch gekennzeichnet, dass** der Heizwärmetauscher (34) in der Klimaanlageneinheit (4) relativ näher zum vorderen Teil der Fahrzeugkarosserie angeordnet ist und dass die Klimaanlageneinheit (4) an einem inneren Abschnitt davon, der hinter dem Heizwärmetauscher (34) und näher beim hinteren Teil der Fahrzeugkarosserie angeordnet ist, mit einem Durchlass versehen ist, der es erlaubt, dass der Luftstrom, der durch den Kühlwärmetauscher (33) geströmt ist, den Heizwärmetauscher (34) umgeht und unterhalb davon weiterströmt.

4. Fahrzeugklimaanlage nach Anspruch 1, **dadurch gekennzeichnet, dass**
ein unterer Wandteil (31) eines Gehäuses (30) für die Klimaanlageneinheit (4) mit einem verlängerten Abschnitt ausgebildet ist, der sich von einer Ecke des unteren Wandteils aus nach außen erstreckt, der an dem einen seitlichen Ende davon in Querrichtung des Fahrzeugs und näher beim vorderen Teil der Fahrzeugkarosserie angeordnet ist; und
dass ein sich von der Oberseite des unteren Wandteils (31) des Gehäuses aus erstreckender Ablaufdurchgang so vorgesehen ist, dass er durch den verlängerten Abschnitt hindurch und nach außerhalb des Gehäuses verläuft.

5. Fahrzeugklimaanlage nach Anspruch 4, **dadurch gekennzeichnet, dass**
der verlängerte Abschnitt in Querrichtung des Fahrzeugs aus dem unteren Wandteil (31) des Gehäuses (30) der Klimaanlageneinheit (4) hervorsteht und sich dann in Richtung des vorderen Teils der Fahrzeugkarosserie erstreckt, so dass, in Längsrichtung der Fahrzeugkarosserie betrachtet, ein vorderes Ende des verlängerten Abschnitts an einer zwischen der Klimaanlageneinheit (4) und der Luftgebläseeinheit (3) befindlichen Position durch eine Spritzwand des Fahrzeugs verläuft; und
dass in Strömungsrichtung ein unteres Ende des Ablaufdurchgangs an der Vorderseite des verlängerten Abschnitts offen ist.

6. Fahrzeugklimaanlage nach Anspruch 1, **dadurch gekennzeichnet, dass** ein in Strömungsrichtung oberes Ende des Ablaufdurchgangs, durch den Kondensat vom Kühlwärmetauscher (33) außerhalb des Gehäuses abgelassen wird, an einem Abschnitt der Oberseite eines unteren Wandteils eines Gehäuses für die Klimaanlageneinheit offen ist, der sich näher beim vorderen Teil der Fahrzeugkarosserie befindet als die Luftabschirmrippe (29).

7. Fahrzeugklimaanlage nach Anspruch 6, **dadurch gekennzeichnet, dass**
der untere Wandteil (31) des Gehäuses (30) der Klimaanlageneinheit (4) mit einem verlängerten Abschnitt ausgebildet ist, der in Querrichtung des Fahrzeugs von einer Ecke des unteren Wandteils vorsteht, der an der einen Seite des Fahrzeugs in dessen Querrichtung und näher beim vorderen Teil des Fahrzeugs angeordnet ist, und sich dann zum vorderen Teil des Fahrzeugs erstreckt, so dass, in Längsrichtung der Fahrzeugkarosserie betrachtet, ein vorderes Ende des verlängerten Abschnitts an einer zwischen der Klimaanlageneinheit und der Luftgebläseeinheit befindlichen Position durch eine Spritzwand des Fahrzeugs verläuft; und
dass ein in Strömungsrichtung unteres Ende des Ablaufdurchgangs, der sich von der Oberseite des unteren Wandteils des Gehäuses aus erstreckt und in Längsrichtung durch den verlängerten Abschnitt verläuft, an der Vorderseite des verlängerten Abschnitts offen ist.

## Revendications

1. Dispositif de climatisation d'un véhicule (1) dans lequel une unité de climatisation (4) et une unité de ventilation d'air (3) sont juxtaposées dans le sens transversal d'un véhicule, l'air envoyé de l'unité de ventilation d'air (3) étant amené dans un espace d'admission situé à l'extrémité inférieure de l'unité de climatisation (4) afin de permettre à l'air de passer vers le haut dans l'unité de climatisation (4), et un échange de chaleur se déroulant par l'intermédiaire d'un échangeur de chaleur refroidissant (33) disposé dans l'unité de climatisation (4) et/ou d'un échangeur de chaleur chauffant (34) disposé au-dessus de l'échangeur de chaleur refroidissant, ainsi produisant de l'air climatisé, le dispositif de climatisation du véhicule étant **caractérisé en ce que**
l'échangeur de chaleur refroidissant (33) est disposé de manière que sa face inférieure soit située en face de l'espace d'admission de l'unité de climatisation (4), et est disposé de manière à s'étendre à peu près horizontalement dans le sens transversal du véhicule, et la face inférieure est disposée de manière à s'incliner dans le sens longitudinal de la caisse du véhicule, de façon que l'extrémité arrière de l'échangeur de chaleur refroidissant (33) soit située dans une position plus élevée, et à permettre que des tubes s'étendent dans le sens longitudinal de la caisse du véhicule;
**en ce que** l'unité de ventilation d'air (3) est disposée dans le sens transversal du véhicule et adjacente à l'unité de climatisation (4);
**en ce qu'**une conduite d'air (5) s'étendant de l'unité de ventilation d'air (3) vers l'extrémité inférieure de l'unité de climatisation est disposée de manière à s'incliner vers le bas entre l'unité de ventilation d'air et l'unité de climatisation;
**en ce que** l'unité de climatisation (4) et/ou la conduite d'air (5) est munie d'une section de guidage du courant d'air pour diriger le courant d'air vers le haut, située à côté d'une partie de l'unité de climatisation (4) et/ou de la conduite d'air (5) qui est située plus proche de l'unité de ventilation d'air (3) disposée dans le sens transversal du véhicule que ladite une extrémité de l'échangeur de chaleur refroidissant dans le sens transversal du véhicule; et
**en ce que** la face supérieure de la partie de la paroi inférieure de l'unité de climatisation (4) qui est située en face de la face inférieure de l'échangeur de chaleur refroidissant (33) est munie d'une rainure d'écoulement (31a) s'étendant le long de l'arête avant de la face supérieure et d'une nervure de protection contre l'air (29) qui saillit en haut et s'étend dans le sens transversal de la caisse du véhicule le long de la rainure d'écoulement (31a) afin de séparer la rainure d'écoulement (31a) et le voisinage de l'arête avant de l'échangeur de chaleur refroidissant (33) de l'espace d'admission.

2. Dispositif de climatisation d'un véhicule selon la revendication 1, **caractérisé en ce que** la section de guidage du courant d'air comprend une face plate qui continue une face inférieure de la paroi du passage de la conduite d'air et s'étend à peu près horizontalement dans le sens transversal du véhicule.

3. Dispositif de climatisation d'un véhicule selon la revendication 1, **caractérisé en ce que** l'échangeur de chaleur chauffant (34) dans l'unité de climatisation (4) est situé relativement plus proche de l'avant de la caisse du véhicule et **en ce que** l'unité de climatisation (4) est munie, du côté d'une partie intérieure de celle-ci située derrière l'échangeur de chaleur chauffant (34) et plus proche de l'arrière de la caisse du véhicule, d'un passage qui permet au courant d'air, étant passé à travers l'échangeur de chaleur refroidissant (33), de contourner l'échangeur de chaleur chauffant (34) et de passer en aval de celui-ci.

4. Dispositif de climatisation d'un véhicule selon la revendication 1, **caractérisé en ce qu'**
une partie de paroi inférieure (31) d'un boîtier (30) de l'unité de climatisation (4) est formée avec une partie allongée qui s'étend vers l'extérieur à partir d'un coin de la partie de paroi inférieure située à ladite une extrémité latérale de celle-ci dans le sens transversal du véhicule et plus proche de l'avant de la caisse du véhicule; et
**en ce qu'**un passage d'écoulement est prévu qui s'étend à partir d'une face supérieure de la partie de paroi inférieure (31) du boîtier pour passer à travers la partie allongée et mener à l'extérieur du boîtier.

5. Dispositif de climatisation d'un véhicule selon la revendication 4, **caractérisé en ce que**
la partie allongée saillit de la partie de paroi inférieure (31) du boîtier (30) de l'unité de climatisation (4) dans le sens transversal du véhicule et ensuite s'étend vers l'avant de la caisse du véhicule de manière que, vu dans le sens longitudinal de la caisse du véhicule, une extrémité avant de la partie allongée passe à travers un tableau d'auvent du véhicule à une position située entre l'unité de climatisation (4) et l'unité de ventilation d'air (3); et
**en ce qu'**une extrémité en aval du passage d'écoulement est ouverte à l'extrémité avant de la partie allongée.

6. Dispositif de climatisation d'un véhicule selon la revendication 1, **caractérisé en ce qu'**une extrémité en amont du passage d'écoulement à travers lequel du condensat venant de l'échangeur de chaleur refroidissant (33) s'écoule vers l'extérieur du boîtier est ouverte du côté d'une partie d'une face supérieure d'une partie de paroi inférieure d'un boîtier pour l'unité de climatisation située plus proche de l'avant de la caisse du véhicule que la nervure de protection contre l'air (29).

7. Dispositif de climatisation d'un véhicule selon la revendication 6, **caractérisé en ce que**
la partie de paroi inférieure (31) du boîtier (30) de l'unité de climatisation (4) est formée avec une partie allongée qui saillit dans le sens transversal du véhicule à partir d'un coin de la partie de paroi inférieure située audit un côté du véhicule dans son sens transversal et plus proche de l'avant de la caisse du véhicule, et qui s'étend ensuite vers l'avant de la caisse du véhicule de manière que, vu dans le sens longitudinal de la caisse du véhicule, une extrémité avant de la partie allongée passe à travers un tableau d'auvent du véhicule à une position située entre l'unité de climatisation et l'unité de ventilation d'air; et
**en ce qu'**une extrémité en aval du passage d'écoulement qui s'étend à partir de la face supérieure de la partie de paroi inférieure du boîtier et qui passe, dans le sens longitudinal, à travers la partie allongée, est ouverte à l'extrémité avant de la partie allongée.
